# EUROPEAN PATENT APPLICATION

(11) **EP 3 330 437 A1**
(43) Date of publication of application: **06.06.2018**
(21) Application number: 16201813.9
(22) Date of filing: 01.12.2016
(51) Int. Cl.: E01B 31/26, E01B 31/24

(54) **METHOD AND KIT FOR SECURING AN ANCHORING MEANS OF A RAILROAD, AND METHOD FOR REPAIRING A RAILROAD**

(71) Applicant: Voestalpine Railpro BV, 1222 AB Hilversum (NL)
(72) Inventor: LAMPE, Wouter, 1200 AW Hilversum (NL); DUL, Andries, 1200 AW Hilversum (NL)
(74) Representative: van Heuvel, Margaretha

(57) **Abstract**

A method for securing an anchoring means (2) of a railroad in a hole (7) of a railroad foundation (1), the method comprising the steps of:
• applying a foamable composition to the hole (7); and
• curing the foamable composition into a cured foam when a section of the anchoring means (2) is within the hole (7);
wherein the method further comprises the step of applying a grease to the section of the anchoring means (2) before said section is introduced in the hole (7) for allowing said anchoring means to be unscrewed from the hole comprising the cured foam.

## Description

### FIELD OF THE INVENTION

The invention is in the field of methods for securing an anchoring means of a railroad in a hole of a railroad foundation and for repairing railroads.

### BACKGROUND OF THE INVENTION

A railroad comprise rails secured to a railroad foundation via anchoring means, for example a spike. The attachment of the rails to the railroad foundation is achieved when the anchoring means are screwed in holes arranged for such a purpose in the railroad foundation, such as a sleeper or a concrete slab, to secure said anchoring means in said hole.

Due to wear and loads subjected by the railroad during use, the hole may be damage causing that the anchoring means is not secured in said hole any longer. Methods for securing the anchoring means again in the hole are known in the art. Said methods apply a foamable composition in the hole. Once the foamable composition is cured into a cured foam, the anchoring means is glued therein.

A problem of the above mentioned methods is that the anchoring means is glued to the railroad foundation. Thus, removal of said anchoring means for maintenance, cleaning or replacement of any component of the railroad cannot be easily done. Further, removal of the glued anchoring means may also cause damage to said railroad foundation and/or anchoring means.

### SUMMARY OF THE INVENTION

It is an object of the present invention to alleviate the above mentioned problems. To this end, a first aspect of the invention relates to a method for securing an anchoring means of a railroad in a hole of a railroad foundation, the method comprising the steps of:
- applying a foamable composition to the hole; and
- curing the foamable composition into a cured foam when a section of the anchoring means is within the hole;
wherein the method further comprises the step of applying a grease to the section of the anchoring means before said section is introduced in the hole for allowing said anchoring means to be unscrewed from the hole comprising the cured foam.

A second aspect of the invention relates to a method for repairing a railroad, wherein in the method an anchoring means of the railroad is secured in a hole of a railroad foundation according to the first aspect of the invention.

Finally, a third aspect of the invention relates to a kit for releasable securing an anchoring means of a railroad to a hole of a railroad foundation, the kit comprising:
a) a foamable composition for securing a section of the anchoring means within the hole when the foamable composition is cured into a cured foam; and
b) a grease for being applied to the section to allow for unscrewing the anchoring means from the cured foam.

### DETAILED DESCRIPTION OF THE INVENTION

The first aspect of the invention concerns a method for securing an anchoring means of a railroad in a hole of a railroad foundation according to claim 1. In this way, the anchoring means is releasable secured in the hole of the railroad foundation. Thus, the anchoring means can be removed out of the railroad foundation if needed, and the risk of damaging said railroad foundation in the process is reduced.

In the method, a foamable composition may be applied in the hole before or after a section of the anchoring means is introduced in said hole. Then, by curation of the foamable composition into a cured foam, the section introduced and, therefore, the anchoring means is secured.

In general, the foamable composition comprises a polyurethane base to provide cured foam with sufficiently rigidity and density to secure the anchoring means when the railroad is in use. The thickness of cured foam around the section of the anchoring means in the hole is between 20 mm and 100mm, preferably between 30 mm and 70 mm and more preferably between 40 mm and 50 mm. It may be possible that the method further comprises a step of increasing the diameter of the hole to have a thickness of cured foam within the above mentioned ranges.

In the method, a grease is applied to the section of the anchoring means before being introduced in the hole. The grease allows for facilitating unscrewing of the anchoring means from the cured foam. Thus, the anchoring means may be removed out of the hole comprising the cured foam if needed without causing damage of said cured foam and/or the railroad foundation comprising the hole. The composition and the amount of the grease to be applied to the section of the anchoring means depend on the foamable composition used and may be anyone as long as it allows the anchoring means to be unscrewed for removal of the hole comprising the cured foam and to be screwd back in back again to secure the anchoring means.

In an embodiment, the method further comprises the steps of removing the anchoring means out of the hole after curation of the foamable composition. In this way, the section and/or the head of the anchoring means may be easily cleaned from any rest of the cured foam.

In an embodiment, the method comprises the step of cleaning of the anchoring means of rests of cured foam adhered to it. The area surrounding the hole may be also easily cleaned of any rests of cured foam and the height of the anchoring means with respect to the hole may be corrected if said anchoring means has been pushed away during foaming of the foamable composition.

In an embodiment, the method further comprises the step of driving the anchoring means back to the hole. When the anchoring means is inserted and screwed into the hole again, it may be stored there, exactly according to the orientation of the anchoring means when the foamable composition was added a cured around it. In case the anchoring means however, is inserted after an other construction part to be fixed on the railroad foundation is located over the hole, the anchoring means will protrude in a smaller depth than it was when the foamable composition was added there and cured around it. In other words, when the anchoring means is used to fix an other construction part to the railroad foundation, it protrudes less deep compared to the moment the foamable composition, the foamable composition being a thread fixing means, was added and cured. To this end, a part of the anchoring means abutting the cured foamable composition, is different from the part of the anchoring means at the time the anchoring means was present in the foamable composition when it was added and cured. As a result of this different abutment, the connection of the anchoring means becomes even stronger so that the connection may be exposed to larger forces.

In an embodiment, the method comprises the step of centering the section of the anchoring means with respect to the walls of the railroad foundation defining the hole by using a guiding means. In this way, the amount of the foamable composition applied within the hole may be reduced while covering the section of the anchoring means with an appropriate thickness of cured foam. In the present application, centering means that the anchoring means is arranged within the hole of the railroad foundation such that the section may be covered with a thickness of cured foam within the ranges disclosed above. The guiding means may be a device to be placed on the top section of the hole, the device comprising a guide, e.g. a nut, for the anchoring means.

In an embodiment, the guiding means is introduced within the hole before the foamable composition is cured into the cured foam to be secured within the hole with the anchoring means. In this way, the anchoring means is centred easily and in a fast way. Plus, accidental movement of the anchoring means during curation of the foamable composition is reduced. Further, since the hole is in general arranged in the railroad foundation such that the longitudinal axis of said hole is in the vertical, the longitudinal axis of the anchoring means may also be easily positioned in the vertical, making screwing and unscrewing more easy. The guiding means to be introduced preferably comprises an inner structure for guiding the anchoring means and an outer structure supporting the inner structure, such that the distance between the outer structure and the inner structure allows for covering of the section of the anchoring means with the appropriate thickness of cured foam.

The second aspect of the invention concerns a method for repairing a railroad, wherein in the method an anchoring means of the railroad is secured in a hole of a railroad foundation as disclosed above. In this way, there is no need of replacing a railroad foundation when the hole cannot secure any longer the anchoring means, making it possible to unscrew said anchoring means in the future if needed, for example for maintenance or reparation of other components of the railroad.

The third aspect of the invention concerns a kit for releasable securing an anchoring means of a railroad to a hole of a railroad foundation according to claim 7. In this way, a kit is provided to enable for example maintenance personnel to perform the method according to the first and the second aspect of the invention.

In an embodiment, the foamable composition comprises a polyurethane material. To this end, the maintenance personnel is having a material which is easy to use on jobsites under a wide range of circumstances caused for example by the weather.

In an embodiment, the grease further comprises ceramic particles in a proportion of 0,85 %wt, the ceramic particles having sizes of approximately 0,20 mm. In this way, the grease is having a positive effect on the curing process while the anchoring means is prevented to get stuck within the foamable composition during the curing process so as to provide the possibility to release the anchoring means from the thread hole the anchoring means just had created.

### BRIEF DESCRIPTION OF THE DRAWINGS

For the purpose of illustrating the invention, the drawings show aspects of one or more embodiments of said invention. However, it should be understood that the present invention is not limited to the precise arrangements and instrumentalities shown in the drawings, wherein:
Fig. 1A is a top view of a constructional part of a railroad foundation, the constructional part showing holes to be used for applying anchoring means to fix a railway construction element to the constructional part of a railroad foundation;
Fig. 1B is a cross sectional view of the constructional part along the centreline IB-IB shown in figure 1A;
Fig. 2A is a perspective view of an alignment means used in the method according to the invention;
Fig. 2B is a schematic side view of an anchoring means used in the method according to the invention;
Fig. 3A is the cross sectional view of the constructional part according to figure1B, wherein the alignment means according to figure 2A is arranged in a hole to mount the anchoring means according to figure 2B in;
Fig. 3B is a top view of the hole according to figure 3A;
Fig. 4 is the cross sectional view of the constructional part according to figure 3A, wherein an anchoring means is inserted.

### DETAILED DESCRIPTION OF THE DRAWINGS

It should be noted that items which have the same reference numbers in different figures, have the same structural features and the same functions. Where the function and/or structure of such item has been explained, there is no necessity for repeated explanation thereof in the detailed description.

It should be noted that the above-mentioned embodiments illustrate rather than limit the invention, and that those skilled in the art will be able to design many alternative embodiments.

In constructions of railways, anchoring means are used for building a railroad which is scheduled to be used for many years. Although such railways are maintained on a regular base, at least parts of these railways need to be exchanged after a long time of their lifetime has already passed to obtain a railway which is strong, safe and reliable. Construction parts fixed to a railroad foundation are subjected to maintenance and need to be released by removing anchoring means which were used to secure construction parts of a railroad to the railroad foundation. Typically, such anchoring means are not releasably mounted to the construction parts and a portion of material locating around the anchoring means when fixed, is released together with the release of the anchoring means, causing a destructed hole in the construction part. Such destructed hole can not be reused for mounting an other part to the construction part, since the dimension of the hole became too wide and the shape of it became jagged to apply an anchoring means once again.

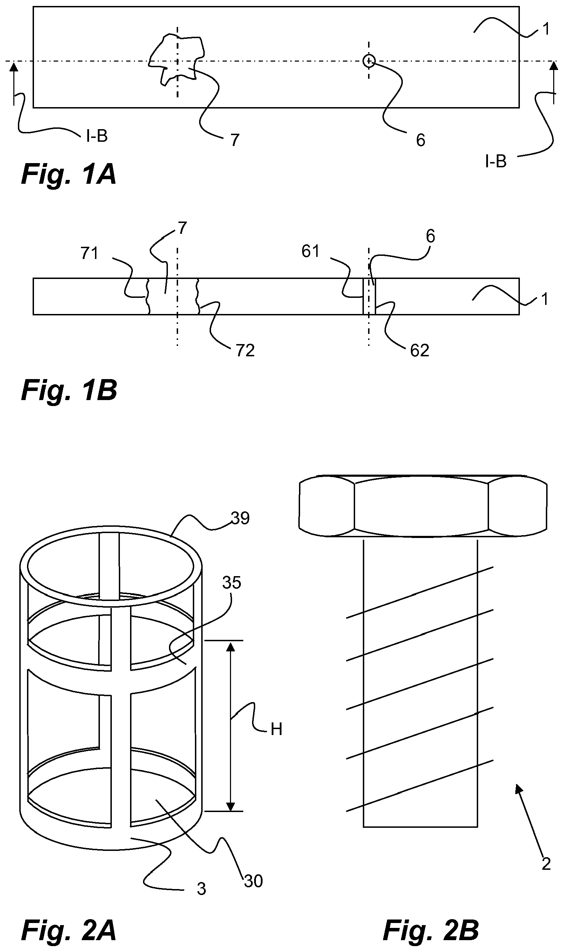

Figure 1A depicts a top side of such construction part 1. In this example, the construction part 1 is a sleeper 1 which is a bar extending transverse to a railroad of a railway to fix the rails on. As such, each sleeper 1 supports a first rail (not shown) and a second rail (not shown) spaced apart from and parallel to the first rail. Such a sleeper 1 may be formed from wood or concrete and such sleeper 1 is well known in the art.

Figure 1A shows two kind of holes. A first hole 6 is depicted at the right side of this top view. The first hole 6 shows a hole corresponding to the starting situation at the time the constructional part was manufactured and not used yet before. A second hole 7 is depicted at the left side of this top view. The second hole 7 shows a hole corresponding to a situation after a substantial lifetime of the constructional part has passed and after an anchoring means having been in there, is removed during which a portion around said anchoring means has been removed as well, leaving behind a hole 7 with a rather jagged shape.

Figure 1B depicts a cross section of the sleeper 1, wherein the first hole 6 is having a smooth circumferential inner surface 61, 62, and wherein the second hole 7 is having a jagged interior 71, 72.

According to the invention, a method is provided for securing an anchoring means of a railroad in a hole 7 of a railroad foundation. In this example, the anchoring means 2 comprises a bolt 2 as depicted in figure 2B, in particular a thread bolt or a collar bolt 2 well known in the art. The method comprises the steps of applying a foamable composition to the hole 7; and curing the foamable composition into a cured foam when a section of the anchoring means 2 is within the hole 7. The method further comprises the step of applying a grease to the section of the anchoring means 2 before said section is introduced in the hole 7 for allowing said anchoring means 2 to be unscrewed from the hole comprising the cured foam.

To perform the method according to the invention, a kit for releasable securing an anchoring means of a railroad to a hole 7 of a railroad foundation is provided. The kit comprises the foamable composition for securing a section of the anchoring means 2 within the hole 7 when the foamable composition is cured into a cured foam. The kit further comprises a grease for to be applied to the section to allow for unscrewing the anchoring means from the cured foam. In this text, the foamable composition is described as a thread fixing means since it will, after the foamable composition is cured, fix the thread of the collar bolt 2 to be fixed to the material the hole is formed in.

The kit according to the invention further comprises a surface cleaning means which is a substance for degreasing different kinds of surfaces, and a joint primer which is a substance to improve the effectiveness of the thread fixing means.

The foamable composition or the thread fixing means are typically based on a polyurethane material, having a shore hardness of 80 (D), having a density of 1110 kg/m³, having a curing time of 15 minutes, and open time of 5 minutes, a tensile strength of 24 MPa, an elongation of 15% at breaking, a resistance of temperature in the range of -30 °C to +100 °C and a temperature to process it in the range of +5 °C to +35 °C. A suitable surface to apply the foamable composition on may be wood, concrete among others. The wide diversity of plastics requires some checks in advance each by each.

An alignment means 3 depicted in figure 2A is arranged for aligning or centralization of the collar bolt 2 with respect to the hole 7. The alignment means 3 form a guiding means 3 to guide the collar bolt 2 into the hole 7 when inserting it. When the collar bolt comes to stop in the hole 7, the alignment means 3 provides a position for the collar bolt 2 when inserting it in the hole 7 as long as there is no material around to keep the collar bolt 2 upright. The alignment means 3 is adapted to determine the amount of glue which has to be injected into the hole. To this end, the alignment means comprises a rim 35 which is spaced apart from the base level 30 over a height dimension H. When filling the hole 7 with the foamable composition up to the rim level 35, this height is sufficient for expansion of the foamable composition during the subsequent curing process.

When the collar bolt 2 is positioned in the center of the hole 7, a minimum adhesive thickness of 4 to 5 mm is ensured around the collar bolt. The total height of the alignment means 3 amounts 130 mm.

The thickness of cured foam around the section of the anchoring means in the hole is between 20 mm and 100mm, preferably between 30 mm and 70 mm and more preferably between 40 mm and 50 mm.

The thread fixing means is an adhesive having two components with an open time of five minutes. In an embodiment, the adhesive is a mixture of 20-50% 1,1',1",1"'-ethylenedinitrilotetrapropane-2-ol (CAS:102-60-3) and glyceryl poly (oxypropylene) triamine (CAS:64852-22-8). In an embodiment, the adhesive is a mixture of 55-100% 4,4'-methylenediphenyl diisocyanate, oligomers (CAS:9016-87-9). The adhesive is in particularly designed to tap wire into the applications where the product has to resist large forces exposed on the means to be fixed. In practical average circumstances, four holes may be filled by means of one cartridge of the thread fixing means.

The kit further comprises detachment grease to minimize adhesion of the thread fixing means on the collar bolt, a specific grease is applied. Specifically, the grease comprises approximately 0,85 wt% ceramic substance, the ceramic substance having particle sizes of approximately 0,20 mm. Generally, the grease to be used comprises a water removing means which allows the foamable composition to be subjected to a proper curing process.

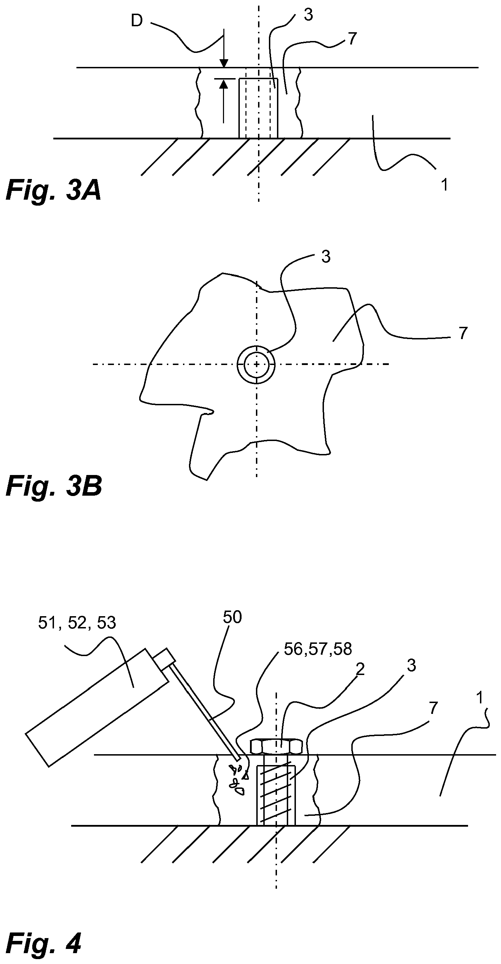

According to the invention, the method comprises the steps of:
- drilling, at the position of a damaged hole 7, a new hole 6, wherein the damaged hole 7 is reamed so that the hole obtains a smooth internal circumferential wall;
- removing released particles from the hole and checking whether the hole is substantially free from released particles, such as woodchips in case the hole 6 is formed by a wooden constructional part 1 such as a wooden sleeper 1;
- directing a nozzle 50 of a spray 51 according to figure 4 and spraying a surface cleaning means 56 into the hole 7, after which the surface cleaning means 56 needs to evaporate on air for at least five minutes;
- directing a nozzle 50 of a spray 52 according to figure 4 and spraying a joint primer means 57 into the hole 7, after which the joint primer means 57 needs to evaporate on air for at least ten minutes;
- putting the alignment means 3 in the hole 7 as depicted in cross sectional view in figure 3A and in top view in figure 3B; the hole 7 needs to be sufficiently deep so as to still offset a top portion 39 of the alignment means 3 sunk for about 10 mm in the hole 7, i.e. the top portion 39 being about 10 mm under the outer surface of the constructional part 1;
- spraying the detachment grease on the outer circumferential surface of the collar bolt 2;
- directing a nozzle 50 of a spray 53 according to figure 4 and spraying the thread fixing means 58 into the hole 7 up to the top of the measure rim 35 of the alignment means 3 present in the hole 7;
- applying, within 30 seconds after spraying the thread fixing means 58 into the hole 7, the collar bolt 2 into the hole 7 of the alignment means 3;
- curing the thread fixing means 58 for at least 10 minutes;
- removing the collar bolt 2 out of the cured thread fixing means 58, by means of untightening the collar bolt 2 from the cured thread fixing means 58; and
- optionally removing any hardened thread fixing means 58 after 15 minutes with a further auxiliary means such as a so called Fein Multimaster which is well known in the art.

## Claims

1. A method for securing an anchoring means of a railroad in a hole of a railroad foundation, the method comprising the steps of:
• applying a foamable composition to the hole; and
• curing the foamable composition into a cured foam when a section of the anchoring means is within the hole;
wherein the method further comprises the step of applying a grease to the section of the anchoring means before said section is introduced in the hole for allowing said anchoring means to be unscrewed from the hole comprising the cured foam.

2. The method according to claim 1, wherein the method further comprises the step of removing the anchoring means out of the hole after curation of the foamable composition.

3. The method according to claim 2, wherein the method further comprises the step of cleaning of the anchoring means of rests of cured foam adhered to it.

4. The method according to claim 2 or 3, wherein the method further comprises the step of driving the anchoring means back to the hole.

5. The method according to anyone of the previous claims, wherein the method comprises the step of centering the section of the anchoring means with respect to the walls defining the hole by using a guiding means.

6. The method according to claim 5, wherein the guiding means is introduced within the hole before the foamable composition is cured into the cured foam to be secured within the hole with the anchoring means.

7. A method for repairing a railroad, wherein in the method an anchoring means of the railroad is secured in a hole of a railroad foundation according to anyone of the claims 1 to 6.

8. A kit for releasable securing an anchoring means of a railroad to a hole of a railroad foundation, the kit comprising:
a) a foamable composition for securing a section of the anchoring means within the hole when the foamable composition is cured into a cured foam; and
b) a grease for being applied to the section to allow for unscrewing the anchoring means from the cured foam.

9. The kit according to claim 8, wherein the foamable composition comprises a polyurethane material.

10. The kit according to claim 8 or 9, wherein the grease further comprises ceramic particles in a proportion of 0,85 %wt, the ceramic particles having sizes of approximately 0,20 mm.
